# EUROPÄISCHE PATENTSCHRIFT

(11) **EP 0 543 875 B1**
(45) Veröffentlichungstag und Bekanntmachung des Hinweises auf die Patenterteilung: **10.08.1994**
(21) Anmeldenummer: 91914570.6
(22) Anmeldetag: 09.08.1991
(51) Int. Cl.: A61C 19/05, A61C 19/045

(54) **VORRICHTUNG ZUR INTRAORALEN ERMITTLUNG DER ZWEIDIMENSIONALEN UNTERKIEFERBEWEGUNG UND DER KIEFERSCHLUSSKRAFT**
DEVICE FOR INTRAORAL DETERMINATION OF THE TWO-DIMENSIONAL MANDIBULAR MOVEMENT AND OF THE JAW CLOSING FORCE
DISPOSITIF DE DETERMINATION INTRA-ORAL DU MOUVEMENT BIDIMENSIONNEL DE LA MACHOIRE INFERIEURE ET DE LA FORCE DE FERMETURE DES MACHOIRES

(30) Priorität: 14.08.1990 DD 343431
(43) Veröffentlichungstag der Anmeldung: 02.06.1993
(73) Patentinhaber: TRANSCOJECT GESELLSCHAFT FÜR MEDIZINISCHE GERÄTE mbH & CO. KG, 24539 Neumünster (DE)
(72) Erfinder: VOGEL, Andreas, D-7010 Leipzig (DE); HEINZE, Rolf, D-7030 Leipzig (DE); WIESINGER, Klaus-Dieter, D-7022 Leipzig (DE)
(74) Vertreter: UEXKÜLL & STOLBERG
(86) Internationale Anmeldenummer: EP9101515
(87) Internationale Veröffentlichungsnummer: WO9203106

(56) Entgegenhaltungen:
- DE-A- 3 806 028
- DE-A- 3 907 444
- US-A- 3 314 152

## Beschreibung

Die Erfindung bezieht sich auf eine Vorrichtung zur intraoralen Ermittlung der zweidimensionalen Unterkieferbewegung und der Kieferschlußkraft gemäß dem ersten Teil von Anspruch 1. Eine derartige Vorrichtung ist allgemein im Stand der Technik bekannt.

Eine auf dem Prinzip der sogenannten Stützstiftregistrierung beruhende Vorrichtung ermöglicht die Ermittlung von Meßwerten in einer Art und Weise, die eine eine Voraussetzung für eine moderne stomatologische Diagnostik und Therapie darstellende extraorale optische Wiedergabe und/oder weitergehende Auswertung und Aufzeichnung der Meßdaten mittels elektronischer Datenverarbeitung ermöglicht.

Bekannt ist die von GYSI bereits 1908 extraoral angewendete und von McGrane 1944 nach intraoral transformierte Stützstifttechnik. Hierbei werden die Bewegungen des Unterkiefers in bezug auf den Oberkiefer mittels eines Schreibstiftes und einer im Gegenkiefer eingesetzten Schreibplatte aufgezeichnet (Freesmeyer u.a. " Die Stützstiftregistrierung", Dental-Labor 06/87). Ferner ist eine Vorrichtung zur intraoralen Registrierung von Unterkieferbewegungen bekannt (DD-A-252 123), bei der mittels am in den Kiefer eingesetzten Trägersystem vorgesehenen, federnden Flanken eine sichere und reproduzierbare Verankerung an den Zähnen möglich ist. Diese Vorrichtung hat jedoch den Nachteil, daß die Art der Ermittlung der Meßergebnisse keine modernen Gesichtspunkten entsprechende Aufzeichnung, Auswertung und Archivierung ermöglicht. Die Verfolgung des Entstehens der Meßergebnisse und eine erste Beurteilung der mechanisch intraoral erzeugten Meßergebnisse kann nicht oder erst nach der Entnahme der Vorrichtung aus dem Mund erfolgen. Eine sichere Aufteilung der erzeugten Kurvenverläufe ist infolge des Mehrfachüberschreibens nicht mehr möglich. Eine statistisch-mathematische Auswertung der Meßergebnisse zur Verbesserung der diagnostischen Aussage läßt sich nicht auf direktem Weg durchführen, sondern muß erst durch zweidimensionale Abnahme der Meßkurve und Digitalisierung vorbereitet werden. Damit treten zusätzliche Aufwendungen und vor allem Zeitverzögerungen ein, so daß keine schnelle Diagnose und Therapieeinleitung möglich ist.

Es ist auch eine Vorrichtung zum Analysieren der Artikulationsbewegung zwischen Ober- und Unterkiefer bekannt (DE-A-3 806 028), bei der das mechanische Aufzeichnungssystem durch ein berührungsloses Aufzeichnungssystem ersetzt ist. Dazu sind in in den Ober- und Unterkiefer einsetzbaren Platten Strahlenquellen- und Empfängeranordnungen vorhanden, aus deren Stellungen relativ zueinander die Artikulationsbewegungen ermittelt werden können. Diese Vorrichtung benötigt jedoch wegen der geringen räumlichen Ausdehnungen im Mund sehr spezielle Sender- und Empfängerbauelemente, die bei kleinstem Raumbedarf eine hohe Richtwirkung besitzen müssen. Der Aufbau der Vorrichtung ist daher verhältnismäßig aufwendig.

Alle bisher bekannten modifizierten Stützstifttechniken gehen davon aus, daß durch Einbringen eines zentralen Stützstiftes zwischen Ober- und Unterkiefer zur Entkopplung der Okklusion eine physiologisch richtige, individuelle Position des Unterkiefers bezüglich dem Oberkiefer erhalten wird, die reproduzierbar ist. Untersuchungen haben jedoch gezeigt, daß die zur Zeit der Registrierung auftretende Kraftkomponente in der Stützstiftachse großen Einfluß auf das geometrische Verhalten der Unterkieferbewegung hat und daher eine Reproduktion nur bei gleichen Kraftverhältnissen möglich ist.

Es ist Aufgabe der Erfindung, eine Vorrichtung zur intraoralen Ermittlung der Unterkieferbewegung und der Kieferschlußkraft zu schaffen, die gleichzeitig die zweidimensionale Unterkieferbewegung und die aufgewandte Kieferschlußkraft intraoral erfaßt.

Zur Lösung dieser Aufgabe wird eine Vorrichtung mit einer in den Kiefer einsetzbaren, einen Stützstift halternden Stützstiftträgeranordnung und einer in den Gegenkiefer einsetzbaren, eine Gegenplatte aufweisenden Trägeranordnung erfindungsgemäß derart ausgestaltet, daß die Gegenplatte dreifach auf einem mit der Trägeranordnung verbundenen Kraftsensor gehaltert ist. Dabei ist die Spitze des Stützstiftes vorteilhafterweise nach dem Prinzip des Kugelschreibers als beweglich gelagerte Kugel ausgebildet.

Die erfindungsgemäße Vorrichtung ermöglicht infolge der besonderen Lagerung der Gegenplatte auf einem Kraftsensor trotz der begrenzten Ausdehnung der in den Kiefer einzusetzenden Trägeranordnung eine genaue Messung bzw. Ermittlung der Kieferschlußkraft und der Unterkieferbewegung, da die Gegenplatte in definierter Weise auf dem Kraftsensor angeordnet ist, der Verlagerungsbewegungen der Gegenplatte ermittelt, wobei die auftretenden Meßwerte ohne Entnahme der Vorrichtung aus dem Mund einer weiteren Auswertung und Aufzeichnung zugeführt werden können.

Die Lagerung der Gegenplatte an der Trägeranordnung erfolgt vorzugsweise punktförmig, wobei die Auflagepunkte auf den Ecken eines gleichseitigen Dreiecks liegen.

In einer besonders bevorzugten Ausgestaltung ist der Kraftsensor der erfindungsgemäßen Vorrichtung als dreiarmige Scheibe mit einem zur Trägeranordnung gerichteten Distanzstück ausgebildet. Auf diese Weise stützt sich der Kraftsensor über das Distanzstück an der Trägeranordnung ab, und die Arme der Scheibe bilden am Distanzstück einseitig eingespannte Biegebalken. Die Gegenplatte ruht auf an den freien Enden der Arme vorgesehenen Auflagepunkten, wodurch sich ein maximaler Meßradius und damit eine erhöhte Auflösung und Genauigkeit der zu messenden Verlagerungsbewegungen der Gegenplatte ergibt, während die Arme die Gegenplatte infolge ihrer zentralen Befestigung am Distanzstück sicher in einer statisch bestimmten Lage halten. Dabei wird der Kraftsensor nicht durch seitlich auf die Gegenplatte wirkende Kräfte beeinflußt.

Bei der Durchführung der Messung kann aus dem Verhältnis der auf die drei Auflagepunkte, also vorzugsweise auf die freien Enden der drei Arme des Kraftsensors wirkenden Einzelkräfte auf die Lage der Spitze des Stützstiftes auf der Gegenplatte und aus der Summe der Meßwerte auf die Kieferschlußkraft geschlossen werden. Dadurch läßt sich mit der erfindungsgemäßen Vorrichtung gleichzeitig sowohl die Lage des Stützstiftes als auch die wirkende Gesamtkraft bestimmen. Veränderungen können über die Zeit verfolgt werden, so daß mehrere Bewegungsbahnen des Stützstiftes voneinander trennbar sind und auch gesondert ausgewertet werden können . Dies ermöglicht wesentlich fundiertere diagnostische Aussagen. Da über die Lage-Kraft-Informationen auch vergleichbare Aussagen über die Geometrie des Gebisses (Veränderung in Abhängigkeit von der Kieferschlußkraft) erhalten werden können, eignet sich die erfindungsgemäße Vorrichtung besonders gut zur Verfolgung der Wirkungen eingeleiteter Therapien. Die Vorrichtung ist darüber hinaus einfach zu handhaben, und elektronisch abgenommene Meßwerte können auf Rechnern be- und verarbeitet sowie auch gespeichert werden.

In einer Ausgestaltung der erfindungsgemäßen Vorrichtung mit einem Kraftsensor in Form einer dreiarmigen Scheibe können auf den Armen der Scheibe Dehnungsaufnehmer angeordnet sein, die zwischen dem Distanzstück und der jeweils am freien Ende der Arme vorgesehenen Auflagen angeordnet sind. Die Dehnungsaufnehmer können Dehnmeßstreifen sein, und die von ihnen abgegebenen Signale können über Kabelverbindungen einer Auswerteschaltung zugeführt werden.

Eine andere Möglichkeit zur Ermittlung der Verformungen der Arme des scheibenförmigen Kraftsensors besteht darin, in der Trägeranordnung jeweils unterhalb der Arme Näherungssensoren, etwa induktive Sensoren anzuordnen, die beispielsweise auf einer mit der Trägeranordnung verbundenen Leiterplatte sitzen können und deren Ausgangssignale einer Auswerteschaltung zuführbar sind.

Die Erfindung wird im folgenden anhand der schematisch Ausführungsbeispiele zeigenden Figuren näher erläutert.
- Figur 1: zeigt in einer perspektivischen Darstellung einen Oberkiefer mit eingesetzter Stützstiftträgeranordnung und einen Unterkiefer mit eingesetzter Trägeranordnung.
- Figur 2: zeigt eine Draufsicht auf die Trägeranordnung aus Figur 1, wobei zur Verdeutlichung die Gegenplatte weggelassen ist.
- Figur 3: zeigt einen Schnitt entlang der Linie III-III aus Figur 2 mit der in Figur 2 nicht dargestellten Gegenplatte.
- Figur 4: zeigt in einer Darstellung entsprechend Figur 3 einen abgewandelten Kraftsensor.

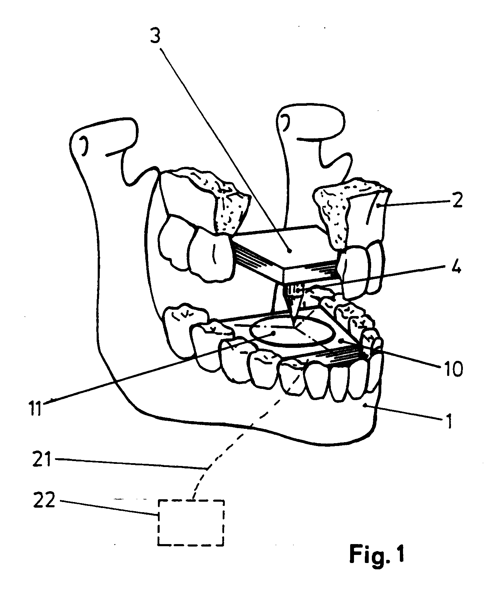

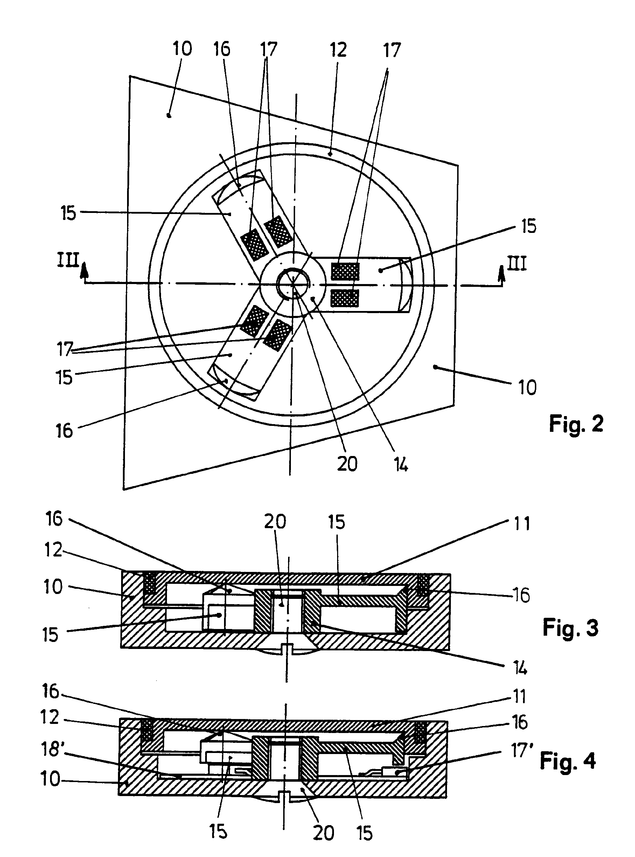

In den in Figur 1 teilweise dargestellten Oberkiefer 2 eines schematisch angedeuteten Gebisses ist eine plattenförmige Stützstiftträgeranordnung 3 eingesetzt, an deren dem Unterkiefer 1 zugewandter Seite ein Stützstift 4 befestigt ist, wobei Stützstiftträgeranordnung 3 und Stützstift 4 beispielsweise aus rostfreiem Stahl bestehen. In den Unterkiefer 1 ist eine beispielsweise aus rostfreiem Stahl bestehende, plattenförmige Trägeranordnung 10 eingesetzt, die eine mittige Vertiefung aufweist, die von einer beispielsweise aus rostfreiem Stahl bestehende Gegenplatte 11 verschlossen wird, zwischen der und der Trägeranordnung 10 sich eine elastische Ringdichtung 12 (Figuren 2 und 3) befindet. Um die bei Eingriff von Spitze des Stützstiftes 4 und oberer Fläche der Gegenplatte 11 infolge Bewegung des Stützstiftes 4 auf der Gegenplatte 11 in deren Ebene wirkenden Reibungskräfte zu verringern, kann die Spitze des Stützstiftes 4 nach Art eines Kugelschreibers eine nicht dargestellte, beweglich gelagerte Kugel aufweisen.

In der Vertiefung der Trägeranordnung 10 sitzt ein Kraftsensor, der die Form einer dreiarmigen Scheibe mit einem zentralen nabenförmigen Distanzstück 14 und sich von diesem radial nach außen erstreckenden Armen 15 hat. Die in Figur 3 untere Endfläche des nabenförmigen Distanzstückes 14 stützt sich auf dem Boden der Vertiefung der Trägeranordnung 10 ab und ist mittels einer sich durch diesen Boden erstreckenden Schraube 20 unverlagerbar in der Trägeranordnung 10 befestigt.

An den freien Enden der Arme 15 sind erhöhte Auflagepunkte 16 für die punktförmige Auflage und Abstützung der Gegenplatte 11 ausgebildet, wobei, wie insbesondere Figur 2 zu entnehmen ist, die drei Auflagepunkte 16 auf den Ecken eines gleichseitigen Dreiecks liegen. Es sei erwähnt, daß sich an der den Auflagepunkten 16 abgewandten Seite der freien Enden der Arme 15 in Figur 3 angedeutete, nach unten gerichtete Begrenzungsvorsprünge befinden, die im normalen Betrieb oberhalb des Bodens der Vertiefung der Trägeranordnung 10 liegen, die jedoch bei einer unzulässig großen Verformung der Arme 15 zur Abstützung auf dem Boden der Trägeranordnung 10 kommen und so eine Beschädigung des Kraftsensors verhindern.

Zwischen dem nabenförmigen Distanzstück 14 und den Auflagepunkten 16 sind an den in gewissem Umfang elastisch verformbaren Armen 15 Dehnmeßstreifen 17 befestigt, die über eine in Figur 1 schematisch angedeutete Kabelverbindung 21 an eine ebenfalls schematisch angedeutete Auswerte-, Anzeige- und/oder Aufzeichnungsanordnung 22 angeschlossen sind.

Zur Ermittlung der Unterkieferbewegung und der Kieferschlußkraft eines Patienten wird die Stützstiftanordnung 3 in den Oberkiefer 2 und die Trägeranordnung 10 in den Unterkiefer 1 des Patienten eingesetzt. Hierzu sind die Flanken von Stützstiftträgeranordnung 3 und Trägeranordnung 10 beispielsweise gemäß DD-A-252 123 ausgebildet. Befindet sich die Spitze des Stützstiftes 4 in diesem eingesetzten Zustand über dem Zentrum des Kraftsensors 14, 15, also auf der Mittelachse der Schraube 20, so werden beim Zubiß alle drei Arme 15 des Kraftsensors in gleichem Maße unter Verlagerung ihrer freien Enden in Richtung auf den Boden der Vertiefung in der Trägeranordnung 10 elastisch verformt. Die in diesem Fall gleich belasteten Dehnmeßstreifen 17 geben daher elektrische Signale gleicher Amplitude ab, die ein Maß für die Kieferschlußkraft ist. Verschiebt sich die Spitze des Stützstiftes 4 infolge Unterkieferbewegung, so werden die Arme 15 und somit auch die Dehnmeßstreifen 17, abhängig von Richtung und Umfang der Verschiebung, unterschiedlich verformt. Die Dehnmeßstreifen 17 geben dann Signale mit unterschiedlichen Amplituden ab. Aus diesen Signalen läßt sich auf einfache Weise die Lage der Spitze des Stützstiftes 4 auf der Gegenplatte 11 ermitteln. Die wirkende Kieferschlußkraft ergibt sich aus dem Betrag der Amplituden der elektrischen Signale bezogen auf den Angriffspunkt des Druckes. Die Erfassung der Amplituden der elektrischen Signale über die Zeit ermöglicht die Darstellung und Untersuchung der zweidimensionalen Unterkieferbewegung gegenüber dem Oberkiefer und die Ermittlung der dabei wirkenden Zubißkraft.

Mit Hilfe der erfindungsgemäßen Vorrichtung ist es dem Arzt bei wiederholten Messungen möglich, durch Hinweise an den Patienten dessen Kieferschlußkraft in gewünschter Weise zu beeinflussen, um die sich dann ergebende Bewegung des Unterkiefers zu ermitteln.

Im Ausführungsbeispiel gemäß Figur 4 sind gleiche Teile wie im Ausführungsbeispiel gemäß Figuren 1 bis 3 mit gleichen Bezugszeichen bezeichnet, und sie werden nicht noch einmal beschrieben.

Abweichend von dem Ausführungsbeispiel gemäß Figuren 1 bis 3 sind bei dem Ausführungsbeispiel gemäß Figur 4 auf den Armen 15 des Kraftsensors keine Dehnmeßstreifen zur Ermittlung der elastischen Verformungen der Arme 15 vorhanden, sondern auf dem Boden der Vertiefung der Trägeranordnung 10 ist eine Leiterplatte 18′ befestigt, auf der unterhalb der an den freien Enden der Arme 15 ausgebildeten Vorsprünge induktive Näherungssensoren 17′ sitzen, deren Ausgangssignale sich in Abhängigkeit vom Abstand der angedeuteten Vorsprünge der Arme 15 von dem jeweiligen Näherungssensors 17′ ändern, wobei diese Ausgangssignale in der gleichen Weise wie in Zusammenhang mit dem Ausführungsbeispiel gemäß Figuren 1 bis 3 erwähnt, nach außen geführt werden können.

Im übrigen stimmt die Funktionsweise des Ausführungsbeispiels gemäß Figur 4 mit derjenigen des Ausführungsbeispiels gemäß Figuren 1 bis 3 überein.

Die erfindungsgemäße Vorrichtung hat zahlreiche Anwendungsmöglichkeiten. So besteht ein zentrales Problem in der Zahnheilkunde bekanntlich darin, unter therapeutischen Aspekten die richtige Zuordnung des Unterkiefers zum Oberkiefer, d.h. das Auffinden einer physiologisch richtigen "Kieferrelation" zu ermöglichen. Mit Hilfe der erfindungsgemäßen Vorrichtung kann mit hoher Sicherheit und auf einfache Weise eine richtige Position ermittelt, festgelegt und auch für nachfolgende zahntechnische Arbeiten, etwa die Anfertigung von Brücken oder Prothesen, nutzbar gemacht werden. Außerdem ermöglicht die erfindungsgemäße Vorrichtung auch die Aufzeichnung eines dysfunktionellen Verhaltens im oralenfaxialen System, wie es durch Erkrankungen entsteht, wobei Untersuchungen über längere Zeiträume durchgeführt werden können.

## Patentansprüche

1. Vorrichtung zur intraoralen Ermittlung der zweidimensionalen Unterkieferbewegung und der Kieferschlußkraft, mit einer in den einen Kiefer (2) einsetzbaren, einen Stützstift (4) halternden Stützstiftträgeranordnung (3) und einer in den Gegenkiefer (1) einsetzbaren, eine Gegenplatte (11) aufweisenden Trägeranordnung (10), **dadurch gekennzeichnet,** daß die Gegenplatte (11) dreifach auf einem mit der Trägeranordnung (10) verbundenen Kraftsensor (14, 15) gehaltert ist.

2. Vorrichtung nach Anspruch 1, **dadurch gekennzeichnet,** daß die Spitze des Stützstiftes (4) als beweglich gelagerte Kugel ausgebildet ist.

3. Vorrichtung nach Anspruch 1 oder 2, **dadurch gekennzeichnet,** daß die am Kraftsensor (14, 15) vorgesehenen Auflagen (16) für die Gegenplatte (11) punktförmig ausgebildet sind und auf den Ecken eines gleichseitigen Dreiecks liegen.

4. Vorrichtung nach einem der Ansprüche 1 bis 3, **dadurch** **gekennzeichnet,** daß der Kraftsensor (14, 15) als dreiarmige Scheibe mit einem zur Trägeranordnung (10) gerichteten Distanzstück (14) ausgebildet ist.

5. Vorrichtung nach Anspruch 4, **dadurch gekennzeichnet,** daß das Distanzstück (14) die Form einer Nabe hat, über die der Kraftsensor (14, 15) mit der Trägeranordnung (10) verbunden ist, und daß die Arme (15) sich vom Distanzstück (7) radial nach außen erstrecken.

6. Vorrichtung nach Anspruch 4 oder 5, **dadurch gekennzeichnet,** daß an den freien Enden der Arme (15) Auflagevorsprünge (16) für die Gegenplatte (11) vorgesehen sind.

7. Vorrichtung nach einem der Ansprüche 4 bis 6, **dadurch** **gekennzeichnet,** daß an den Armen (15) Dehnungsaufnehmer (17) befestigt sind, die über Kabelverbindungen (21) mit einer Auswerte-, Anzeige- und/oder Aufzeichnungsanordnung (22) verbunden sind.

8. Vorrichtung nach Anspruch 7, **dadurch gekennzeichnet,** daß die Dehnungsaufnehmer (17) aus Dehnmeßstreifen bestehen.

9. Vorrichtung nach einem der Ansprüche 4 bis 6, **dadurch** **gekennzeichnet,** daß an der Trägeranordnung (10) zwischen dieser und der Unterseite jedes Arms (15) Näherungssensoren (17′) vorgesehen sind.

10. Vorrichtung nach Anspruch 9, **dadurch gekennzeichnet,** daß die Näherungssensoren (17′) induktive Sensoren sind, die auf einer an der Trägeranordnung (10) vorgesehenen Leiterplatte (18′) befestigt sind.

## Claims

1. Device for the intraoral determination of the two-dimensional mandibular movement and the jaw occlusion force, with a bearing pin support arrangement (3) which can be introduced into the one jaw (2) and which holds a bearing pin (4), and a support arrangement (10) which can be introduced into the opposite jaw (1) and which has a counterplate (11), characterized in that the counterplate (11) is mounted at three points on a force sensor (14, 15) connected to the support arrangement (10).

2. Device according to Claim 1, characterized in that the tip of the bearing pin (4) is designed as a movably mounted ball.

3. Device according to Claim 1 or 2, characterized in that the supports (16) provided on the force sensor (14, 15) for the counterplate (11) are of punctiform configuration and lie at the corners of an equilateral triangle.

4. Device according to one of Claims 1 to 3, characterized in that the force sensor (14, 15) is designed as a three-armed disc with a spacing piece (14) directed towards the support arrangement (10).

5. Device according to Claim 4, characterized in that the spacing piece (14) has the form of a hub by means of which the force sensor (14, 15) is connected to the support arrangement (10), and in that the arms (15) extend radially outwards from the spacing piece (14).

6. Device according to Claim 4 or 5, characterized in that support projections (16) for the counterplate (11) are provided at the free ends of the arms (15).

7. Device according to one of Claims 4 to 6, characterized in that extension sensors (17) are secured on the arms (15), which extension sensors (17) are connected via cable connections (21) to an evaluation, display and/or recording arrangement (22).

8. Device according to Claim 7, characterized in that the extension sensors (17) consist of strain gauges.

9. Device according to one of Claims 4 to 6, characterized in that proximity sensors (17′) are provided on the support arrangement (10) between the latter and the underside of each arm (15).

10. Device according to Claim 9, characterized in that the proximity sensors (17′) are inductive sensors which are secured on a circuit board (18′) provided on the support arrangement (10).

## Revendications

1. Dispositif de détermination intra-orale du mouvement bidimensionnel de la mâchoire inférieure et de la force de fermeture des mâchoires, comportant un support de tige d'appui (3) maintenant une tige d'appui (4), à placer dans une mâchoire (2) et un support (10) présentant une contre-plaque (11) à placer dans la contre-mâchoire (1), caractérisé en ce que la contre-plaque (11) est maintenue en trois points sur un capteur de force (14, 15) relié au support (10).

2. Dispositif selon la revendication 1, caractérisé en ce que la pointe de la tige d'appui (4) est conçue à la manière d'une bille montée mobile.

3. Dispositif selon les revendications 1 ou 2, caractérisé en ce que les appuis (16), prévus sur le capteur de force (14, 15), pour la contre-plaque (11) sont en forme de points et se situent aux angles d'un triangle équilatéral.

4. Dispositif selon l'une des revendications 1 à 3, caractérisé en ce que le capteur de force (14, 15) est un disque à trois bras avec une pièce d'écartement (14) dirigée vers le support (10).

5. Dispositif selon la revendication 4, caractérisé en ce que la pièce d'écartement (14) a la forme d'un moyeu par lequel le capteur de force (14, 15) est relié au support (10), et en ce que les bras (15) s'étendent radialement vers l'extérieur à partir de la pièce d'écartement (7).

6. Dispositif selon la revendication 4 ou 5, caractérisé en ce qu'aux extrémités libres des bras (15) sont prévues des saillies d'appui (16) pour la contre-plaque (11).

7. Dispositif selon l'une des revendications 4 à 6, caractérisé en ce que sur les bras (15) sont fixés des capteurs d'extension (17) qui sont reliés par des câbles de liaison (21) à un dispositif d'exploitation, d'affichage et/ou d'enregistrement (22).

8. Dispositif selon la revendication 7, caractérisé en ce que les capteurs d'extension (17) sont des extensomètres à bande.

9. Dispositif selon l'une des revendications 4 à 6, caractérisé en ce que des capteurs de proximité (17′) sont prévus sur le support (10), entre celui-ci et la face inférieure de chaque bras (15).

10. Dispositif selon la revendication 9, caractérisé en ce que les capteurs de proximité (17′) sont des capteurs inductifs, qui sont fixés sur une plaque de circuits imprimés (18′) prévue sur le support (10).
